# EUROPEAN PATENT SPECIFICATION

(11) **EP 4 686 894 B1**
(45) Date of publication and mention of the grant of the patent: **04.11.2026**
(21) Application number: 25193424.6
(22) Date of filing: 01.08.2025
(51) Int. Cl.: F24F 6/12, F24F 13/20, F24F 6/00

(54) **HUMIDIFIER**
BEFEUCHTER
HUMIDIFICATEUR

(30) Priority: 02.08.2024 KR 20240103253
(43) Date of publication of application: 04.02.2026
(73) Proprietor: LG Electronics Inc., Yeongdeungpo-gu Seoul 07336 (KR)
(72) Inventor: KU, Myungjin, Seoul (KR); KEUM, Kyoha, Seoul (KR); LEE, Kunyoung, Seoul (KR); LEE, Donggun, Seoul (KR); JEON, Jihye, Seoul (KR)
(74) Representative: Vossius & Partner Patentanwälte Rechtsanwälte mbB

(56) References cited:
- EP-A1- 2 860 464
- EP-A1- 4 390 252
- CN-A- 116 007 097
- CN-U- 217 383 181

## Description

The present invention relates to a humidifier, and more particularly, to a humidifier that detects water level by a weight sensor.

A humidifier is a device that evaporates water to emit humidified air with a high moisture content.

The humidifier requires a water tank that holds water since it generates humidified air from water. The user needs to check the water level in the water tank to know when it's time to supply water to the water tank.

A floating valve, which moves as the water level changes, may be used to detect the water level in the water tank. Also, the water level may be detected by sensing the weight of the water tank.

Patent Registration No. KR 10-2505499 B1 discloses a humidifier that detects water level based on weight.

Incidentally, such a humidifier requires water not to enter a weight measurement area. Also, correct placement of the water tank in the weight measurement area is crucial for accurately detecting the water level in the water tank.

Another issue is that placing another component between the water tank and the weight measuring component can lead to challenges in accurately sensing the weight of the water tank.

Therefore, the present invention has been made in view of the above problems, and it is an object of the present invention to solve the above-described problems and other problems. The present invention is specified by the independent claim. Preferred embodiments are defined by the dependent claims.

If water or humidified air enters a structure where a weight sensor is placed, an error may occur to the operation of the weight sensor. Another object of the present invention is to solve this problem.

That is, there is provided a humidifier capable of minimizing the entry of water or humidified air into the middle tray where the weight sensor is placed.

Moreover, if water enters the space where the weight sensor is placed and collects therein, an error may occur to the operation of the weight sensor. Another object of the present invention is to solve this problem.

That is, there is provided a humidifier that has a structure for releasing the water admitted into the middle tray to the outside.

Furthermore, if there is a portion that pushes down on the middle tray, other than where the weight of the water tank is applied, or if the weight of the water tank is applied to an area other than where the weight sensor of the middle tray is placed, the weight sensor may not be able to operate properly. Another object of the present invention is to solve this problem.

That is, the present invention has been made in an effort to provide a humidifier that allows for accurate measurement by a weight sensor, by making contact with the middle array in a direction perpendicular to a vertical direction, except for portions required to measure the weight of the water tank.

An embodiment of the present invention provides a humidifier according to claim 1.

A humidifier of the present invention has one or more of the following effects.

First, it is possible to prevent water or humidified air from entering the middle tray by placing a tray sealer where the humidified air moves. Also, it is possible to minimize the entry of humidified air by the placement and configuration of the tray sealer.

Second, a tray drain hole may be formed within the middle tray to prevent water from collecting inside. Also, a plurality of structures for guiding the admission of air to the inside may be provided to prevent water from moving to a sensor or a circuit board.

Third, a lower side of a lower protrusion of the inner shell contacts the middle tray. Meanwhile, an exhaust connecting tube of the inner shell may be configured in such a way as to make contact with the sealer, and the connector may also be configured in such a way that a circumferential surface thereof contacts the supply pipe. That is, an area of contact for sealing may be perpendicular to a vertical direction or be sloped, thereby allowing for accurate sensing by the weight sensor.

The effects of the present invention are not limited to the above-mentioned effects, and other effects that are not mentioned may be obviously understood by those skilled in the art from the claims.

### BRIEF DESCRIPTION OF THE DRAWINGS

FIG. 1 is a perspective view of a humidifier according to one embodiment of the present invention.
FIG. 2 is a plan view of FIG. 1.
FIG. 3 is a cross-sectional view taken along III-III' of FIG. 2.
FIG. 4 is an exploded perspective view of an inner shell with a water tank placed therein and a middle tray according to an embodiment of the present invention.
FIG. 5 is a perspective view of the inner shell where the water tank is placed, according to an embodiment of the present invention.
FIG. 6 is a bottom view of FIG. 5.
FIG. 7 is a side view of FIG. 5.
FIG. 8 is a plan view of the middle tray according to an embodiment of the present invention.
FIG. 9 is a perspective view of FIG. 8.
FIG. 10 is a cross-sectional view of one side of the middle tray of FIG. 8.
FIG. 11 is an exploded perspective view of a tray body and a tray base, according to an embodiment of the present invention.
FIG. 12 is a plan view of the tray base according to an embodiment of the present invention.
FIG. 13 is a perspective view of FIG. 11.
FIG. 14 is a cross-sectional view of one side of the inner shell with the water tank placed therein when the inner shell is placed over the middle tray, according to an embodiment of the present invention.
FIG. 15 is a cross-sectional view of another side of the inner shell with the water tank placed therein when the inner shell is placed over the middle tray, according to an embodiment of the present invention.

### DETAILED DESCRIPTION OF THE PREFERRED EMBODIMENTS

Advantages and features of the present invention and methods of achieving them will become apparent with reference to the embodiments described below in detail in conjunction with the accompanying drawings. However, the present invention is not limited to the embodiments disclosed below, but may be implemented in various different forms, and these embodiments are provided only to allow the disclosure of the present invention to be complete, and to completely inform those of ordinary skill in the art to which the present invention belongs, the scope of the invention, and the present invention is only defined by the scope of the claims. Like reference numerals refer to like elements throughout the specification.

Hereinafter, the present invention will be described with reference to the drawings for explaining a humidifier according to embodiments of the present invention.

A humidifier of the present invention may generate humidified air from water by ultrasonic vibration. A humidifier of the present invention may generate humidified air by heating water. A humidifier of the present invention may generate humidified air produced by ultrasonic vibration and humidified air produced by heating.

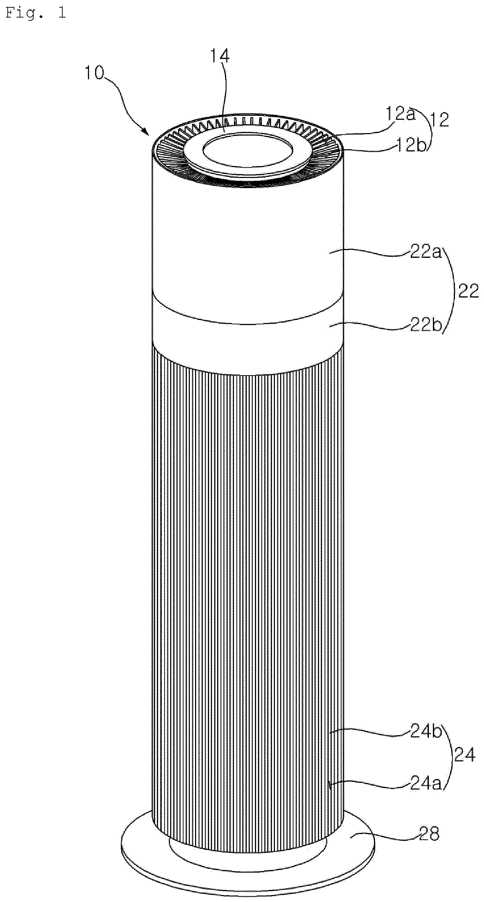

Referring to FIG. 1, an exterior of a humidifier of the present invention will be described.

The humidifier may include a casing 10 that forms the exterior, with an inlet 24a and an outlet 12a formed therein.

The casing 10 may have an overall cylindrical shape.

The casing 10 may include an intake grille 24 which forms the inlet 24a through which air is admitted, and preferably a discharge grille 12 which forms the outlet 12a through which air is discharged. The inlet 24a may be formed on a circumferential surface of the casing 10 having a cylindrical shape. The outlet 12a may be formed on a top surface of the casing 10 having a cylindrical shape. The humidifier of the present invention may allow air to be admitted through the circumferential surface and be discharged through the top surface.

The intake grille 24 may include a plurality of ribs 24b that extend vertically. The plurality of grilles 24b may be spaced apart in a circumferential direction of the intake grille 24. A plurality of inlets 24a may be formed between the plurality of grilles 24b.

The casing 10 may include a water tank cover 14 disposed on top of the water tank 100.

The humidifier may include a discharge grille 12 forming the outlet 12a and a water tank cover 14 disposed on top of the water tank 100.

The discharge grille 12 may be configured to be separated upward from an outer shell 22 to be described later. The water tank cover 14 may be configured to be separated from the discharge grille 12 or from the water tank 100 to be described later.

The discharge grille 12 may include a plurality of ribs 12b that extend radially from the outer periphery of the water tank cover 14. The plurality of ribs 12b disposed at the discharge grille 12 may be spaced apart circumferentially from the outer periphery of the water tank cover 14.

The casing 10 may include an outer shell 22 for directing the air moving inside it to the outlet 12a.

The outer shell 22 may include an upper outer shell 22a disposed under the discharge grille 12 and a lower outer shell 22b disposed under the upper outer shell 22a. The lower outer shell 22b may be formed of a transparent material.

The humidifier may include a base 28 disposed under the casing 10, which causes the casing 10 to be spaced a certain distance apart from the ground. An upper end portion of the base 28 may be connected to a lower end portion of the casing 10.

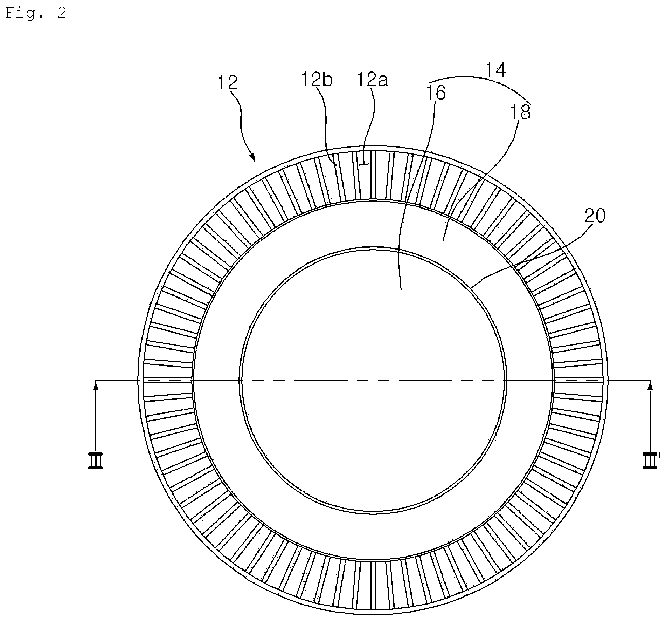

Hereinafter, a top portion of the humidifier will be described with reference to FIG. 2.

The water tank cover 14 may include a central cover 16 and a peripheral cover 18 disposed around the central cover 16. The central cover 16 may bulge upward toward the center. A water supply hole 20 may be formed between the peripheral cover 18 and the central cover 16 to allow water to move into the water tank 100.

A plurality of outlets 12a may be formed between the plurality of ribs 12b disposed at the discharge grille 12.

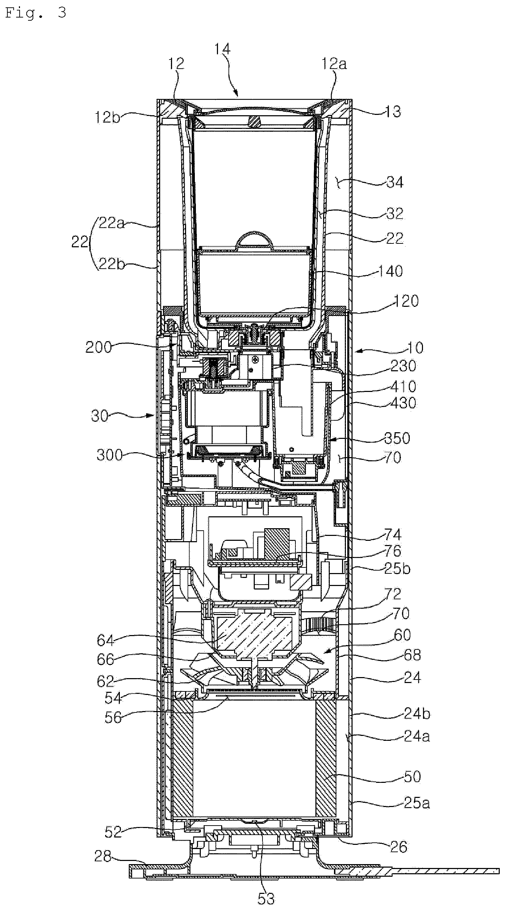

Hereinafter, an internal construction of the humidifier will be described with reference to FIG. 3.

The humidifier may include a filter unit disposed inside the casing 10, for filtering the air admitted into the inlets 24a. The humidifier may include a blower 60 disposed inside the casing 10, for moving the air inside the casing 10 from the inlets 24a to the outlets 12a. The humidifier may include a water tank 100 disposed inside the casing 10, for holding water. The humidifier may include a humidification module that generates humidified air from water supplied from the water tank 100.

The humidifier may include a base 28. The base 28 may cause the casing 10 to be spaced upward from the ground. The base 28 may be connected to a bottom wall 26 of the casing 10.

The casing 10 may include a bottom wall 26 which covers the bottom of the intake grille 24.

An upper end portion of the base 28 may be connected to the bottom wall 26. The bottom wall 26 may be disposed in such a way as to cover a bottom surface of the humidifier which is spaced upward from the ground by the base 28.

The intake grille 24 may cover the outsides of a filter 50 and a blower housing 68 to be described below. The intake grille 24 may have a plurality of inlets 24a that are vertically formed and circumferentially spaced apart. The inlets 24a may be formed around where the filter 50 is placed. The inlets 24a may be formed in a lower portion of the intake grille 24. The lower portion of the intake grille 24 may be formed with inlets 24a, and an upper portion of the intake grille 24 may be enclosed to protect the internal construction of the humidifier.

The outer shell 22 may be disposed over the intake grille 24.

The filter unit may allow the air admitted through the inlets 24a to be filtered through the filter 50. The filter unit may allow the filtered air to move upward.

The filter unit may include a filter 50 for filtering the air admitted through the inlets 24a and a filter mounting portion for fixing the filter 50 in place inside the casing 10.

The filter 50 may be cylindrical. Thus, the filter 40 may be able to filter air drawn in from longitudinal and lateral directions perpendicular to the vertical direction. The air admitted through the inlets 24a may move to an inside space of the filter 50. The air passed through the filter 50 may move to the blower 60 disposed over the filter 50.

The filter mounting portion may include a lower plate 52 disposed on a lower side of the filter 50, an upper plate 54 disposed on an upper side of the filter 50, and a supporter (not shown) connecting the lower plate 52 and the upper plate 54.

The lower plate 52 may be disposed on a lower side of the filter 50. The lower plate 52 may move up and down and detect whether the filter 50 is placed. A fan sterilizer 53 may be disposed in the center of the lower plate 52 to emit ultraviolet light upward.

The fan sterilizer 53 may sterilize a blower fan 62 to be described below or the inside of the filter 50.

An orifice 56 may be formed in the upper plate 54. The orifice 56 may be formed in the center of the upper plate 54. The orifice 56 may allow the air admitted to the inside of the filter 50 to move to the blower fan 62. An inner circumferential end of the upper plate 54 may be bent upward so as to guide the upward movement of air in the inside space of the filter 50 to the blower fan 62.

The supporter may connect the lower plate 52 and the upper plate 54. The supporter may be circumferentially spaced apart.

The blower 60 may include a blower fan 62 that forms an air flow within the casing 10 and preferably a fan motor 64 that rotates the blower fan 62.

The blower fan 62 may have a fan intake opening on one side facing the orifice 56 and a fan discharge opening on the opposite side of the fan intake opening. The blower fan 62 may be a diagonal flow fan in which the fan discharge opening on the opposite side of the fan intake opening faces in a centrifugal direction. The blower fan 62 may include a hub connected to the fan motor 64, a shroud spaced apart from the hub by a certain distance and forming the fan intake opening, and a blade extending radially to connect the hub and the shroud.

The blower fan 62 may be activated to send air upward from below. The blower fan 62 may draw air toward the orifice 56 and discharge air to the blower housing 68 where a diffuser 72 is placed.

The fan motor 64 may be disposed over the blower fan 62.

The blower may include a motor cover 66 that covers the outside of the fan motor 64, and preferably a blower housing 68 spaced radially outward from the motor cover 66, that may guide the upward movement of air blown by the blower fan 62.

A blower channel 70 along which the air blown by the blower fan 62 moves upward may be formed between the motor cover 66 and the blower housing 68. The blower channel 70 may extend as far as where a humidification module housing 410 and a channel housing 430 are formed.

The intake grille 24 may be disposed on the outside of the blower housing 68.

The blower 60 may include a diffuser 72 disposed between the motor cover 66 and the blower housing 68, that reduces rotational components of the air blown upward by the blower fan 62. A plurality of diffusers 72 may be circumferentially spaced apart.

A control box 74 forming a space within which a circuit board 76 is placed may be disposed over the motor cover 66. The control box 74 may be spaced apart inwardly from the blower housing 68. Thus, the blower channel 70 may be formed in the space between the control box 74 and the blower housing 68 as well.

A plurality of circuit boards 76 may be placed within the control box 74. The humidification module may include a first humidification reservoir 300 which heats water. The humidification module may include a second humidification reservoir 350 which generates humidified air from water. The humidification module may include a humidification module housing 410 which covers the peripheries of the first humidification reservoir 300 and the second humidification reservoir 350. The channel housing 430 may be disposed around the outer periphery of the humidification module housing 410. The blower channel 70 may be formed between the humidification module housing 410 and the channel housing 430.

The humidifier includes a water tank 100 forming a space in which water is held, with an inner shell 180 forming a space in which the water tank 100 is placed, and a middle tray 200 disposed under the inner shell 180.

The water tank 100 may have an inner reservoir 102 placed inside an outer reservoir 160. Thus, a connector 120 may be placed in a through-hole 164 of the outer reservoir 160.

The outer reservoir 160, while placed inside the inner shell 180, may be disposed over the middle tray 200. The middle tray 200 may be a structure that supports the outer reservoir 160 and the inner reservoir 102. Thus, a loads of the inner reservoir 102, the outer reservoir 160, and the inner shell 180 may be transferred to the middle tray 200.

The outer reservoir 160 may be placed around the outer periphery of the inner reservoir 102.

The inner reservoir 102 may be placed inside the outer reservoir 160. When the inner reservoir 102 is placed inside the outer reservoir 160, an outer circumferential surface of the inner reservoir 102 may be disposed in such a way as to make contact with an inner circumferential surface of the outer reservoir 160.

The humidifier may include a water softener 140 placed within the inner reservoir 102.

The water softener 140 may be placed inside the inner reservoir 102. The water softener 140 may be fixed in place as it is connected to the connector 120 placed inside the inner reservoir 102.

The inner shell 180 may be spaced apart from the outer reservoir 160. The inner shell 180 may be spaced apart from the water tank 100. A first discharge passage 32 along which humidified air moves may be formed between the inner shell 180 and the outer reservoir 160.

A second discharge passage 34 may be formed between the outer shell 22 and the inner shell 180.

The inner shell 180 and the outer shell 22 may be spaced apart from each other and form the second discharge passage 34. Filtered clean air blown by the blower 60 may move along the second discharge passage 34.

The discharge grille 12 may be disposed over the first discharge passage 32 and the second discharge passage 34 which will be described below.

The discharge grille 12 may be have a certain height in the vertical direction. Thus, a mixture passage 13 may be formed between the plurality of ribs 12b of the discharge grille 12. In the mixture passage 13, the air moving through the first discharge passage 32 and the air moving through the second discharge passage 34 may be mixed together.

The plurality of ribs 12b may be formed in such a way that outer peripheral ends thereof are disposed higher than inner peripheral ends thereof. Thus, the air moving through the first discharge passage 32 and the second discharge passage 34 may be guided radially inwardly.

A display 30 may be disposed on one side of the casing 10. The display 30 may allow the user to control the power or operation of the humidifier. The display 30 may be a display that shows the operating status or the like of the humidifier to the user.

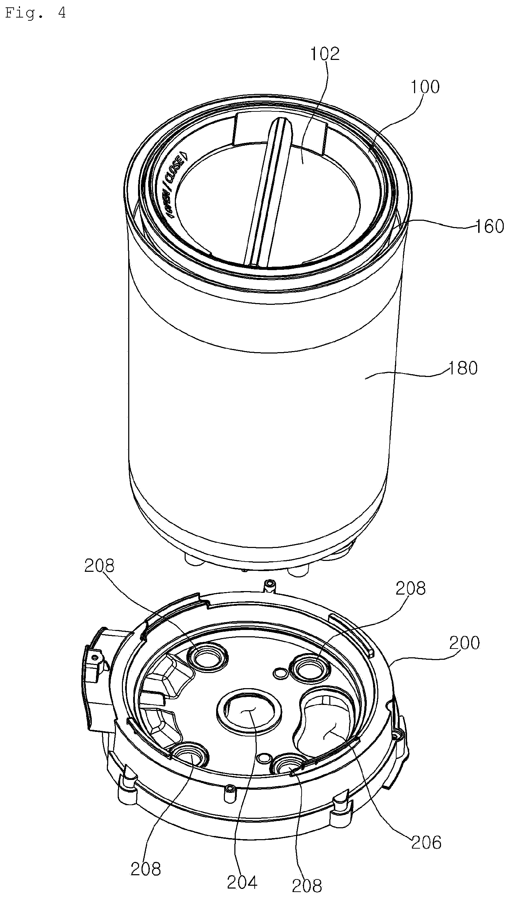

Referring to FIG. 4, the middle tray, the inner shell, and the water tank will be described.

The water tank 100 may be placed within the inner shell 180. The inner reservoir 102 and the outer reservoir 160 may be placed within the inner shell 180.

The inner shell 180 is disposed over the middle tray 200.

The middle tray 200 is disposed over the humidification module. The middle tray 200 is disposed between the humidification module and the water tank 100. The middle tray 200 may have a first hole 204 for a supply pipe to penetrate and has a second hole 206 for the humidified air generated by the humidification module to move through.

A plurality of sensor recesses 208 and a plurality of projections may be formed on the middle tray 200 to fix the overlying inner shell 180 in place.

Weight sensors 226 and 227 may be disposed under the sensor recesses 208.

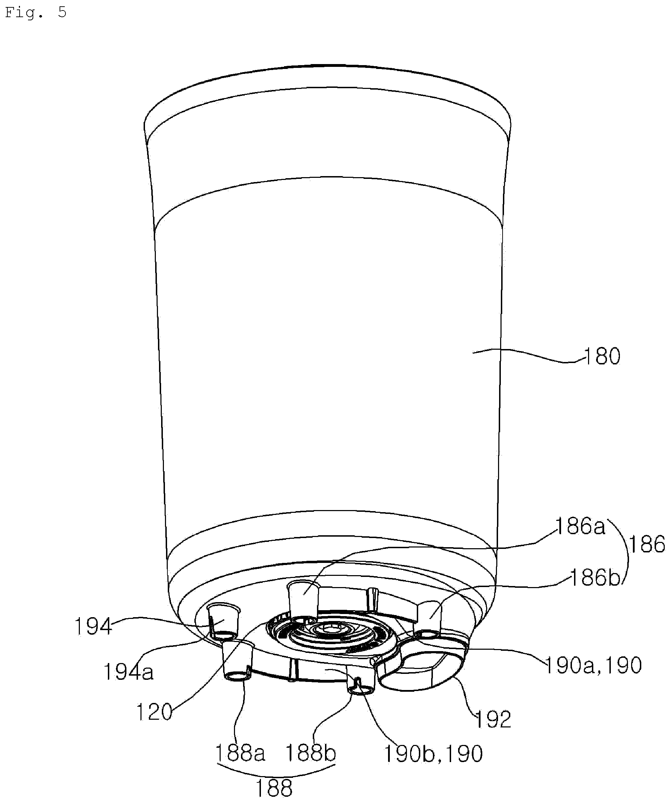

Referring to FIGS. 5 through 7, a structure of the inner shell will be described.

The water tank 100 and the connector 120 may be placed within the inner shell 180. Part of the construction of the connector 120 may be exposed out of the inner shell 180.

The inner shell 180 may form a space inside where the water tank 100 is placed. The inner shell 180 may be configured to be connected to the water tank 100. Thus, when the inner shell 180 is placed over the middle tray 200, a load of the water tank 100 may be transferred to the middle tray 200.

The inner shell 180 may have a structure in which a top surface thereof is open. A shell through-hole 184 may be formed in a bottom surface of the inner shell 180, for part of the construction of the connector 120 to penetrate. The shell through-hole 184 may be disposed over the first hole 204 of the middle tray 200.

An exhaust connecting tube 192 is disposed on the bottom surface of the inner shell 180 to supply the humidified air released from the humidification module to the first discharge passage 32. The exhaust connecting tube 192 is disposed over the second hole 206 of the middle tray 200.

A plurality of lower protrusions 186 and 188 may be disposed on the bottom surface of the inner shell 180, placed over the weight sensors 226 and 227 of the middle tray 200 and spaced apart longitudinally or laterally. The plurality of lower protrusions 186 and 188 may protrude downward from the bottom surface of the inner shell 180.

Four lower protrusions 186 and 188 may be disposed on the bottom surface of the inner shell 180, spaced apart longitudinally and laterally.

A lower rib 190 may be disposed on the bottom surface of the inner shell 180 to connect together two lower protrusions 186 and 188 that are spaced longitudinally. When the inner shell 180 is placed over the middle tray 200, the lower rib 190 may be spaced a certain distance upward from a upper surface of the middle tray 200.

Two lower ribs 190 may be disposed on the bottom surface of the inner shell 180, spaced apart laterally. The two lower ribs 190 may be disposed on the left and right sides of the shell through-hole 184. A first lower rib 190a disposed on one side of the shell through-hole 184 and a second lower rib 190b disposed on the other side of the shell through-hole 184 may be disposed on the bottom surface of inner shell 180.

A fixing projection 194 may be disposed on the bottom surface of the inner shell 180 to fix the inner shell 180 in place. The fixing projection 194 may be disposed at the front of the bottom surface of the inner shell 180. The fixing projection 194 may be disposed in front of the exhaust connecting tube 192. The fixing projection 194 may be disposed in front of the shell through-hole 184.

A fixing slit 194a may be formed at one portion of a circumferential surface of the fixing projection 194. A fixing rib 212 of the middle tray 200 to be described later may be inserted into the fixing slit 194a.

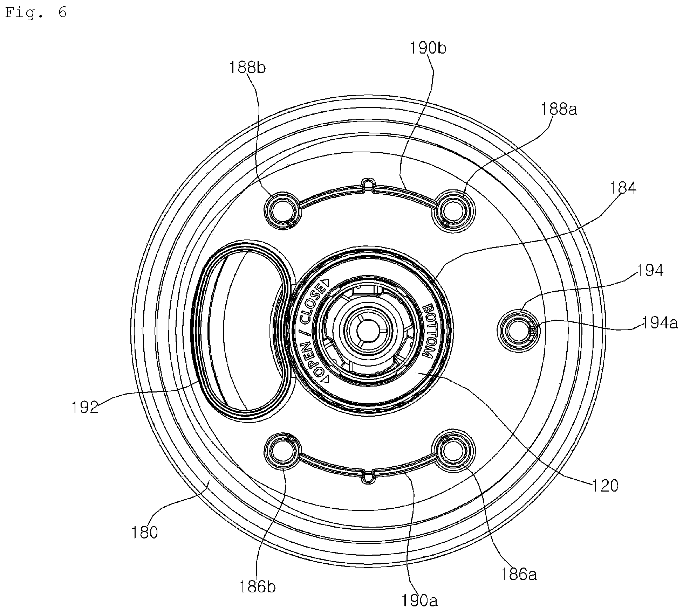

Referring to FIG. 6, a configuration of components on the bottom surface of the inner shell 180 will be described.

The shell through-hole 184 may be formed in the center of the inner shell 180. Part of the construction of the connector 120 may be placed in the shell through-hole 184.

The exhaust connecting tube 192 may be disposed at the rear of the shell through-hole 184. The fixing projection 194 may be disposed in front of the shell through-hole 184. The fixing slit 194a may be formed in front of the fixing projection 194.

The plurality of lower protrusions 186 and 188 may be disposed on the left and right sides of the shell through-hole 184.

First lower protrusions 186 disposed on one side of the shell through-hole 184 and second lower protrusions 188 disposed on the opposite side of the first lower protrusions 186 relative to the shell through-hole 184 may be formed on the bottom surface of the inner shell 180.

The first lower protrusions 186 may include a first front lower protrusion 186a and a first rear lower protrusion 186b disposed at the rear of the first front lower protrusion 186a. The first lower rib 190a may connect the first front lower protrusion 186a and the first rear lower protrusion 186b.

The second lower protrusions 188 may include a second front lower protrusion 188a and a second rear lower protrusion 188b disposed at the rear of the second front lower protrusion 188a. The second lower rib 190b may connect the second front lower protrusion 188a and the second rear lower protrusion 188b.

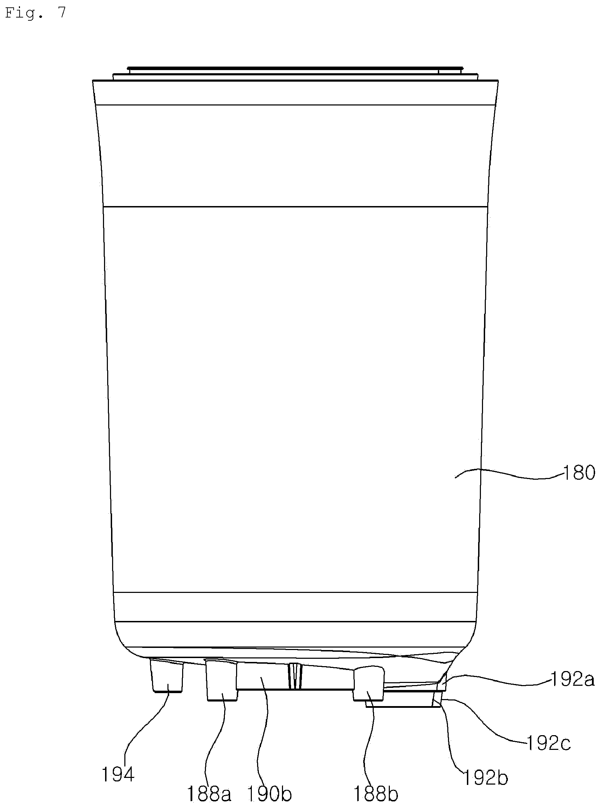

Referring to FIG. 7, the heights of components on the bottom surface of the inner shell 180 will be described.

Lower ends of the plurality of lower protrusions 186 and 188 may be formed at the same vertical position.

Lower ends of the lower ribs 190 may be disposed higher than the lower ends of the lower protrusions 186 and 188. A lower end of the fixing projection 194 may be disposed higher than the lower ends of the lower protrusions 186 and 188. A lower end of the exhaust connecting tube 192 may be disposed lower than the lower ends of the lower protrusions 186 and 188.

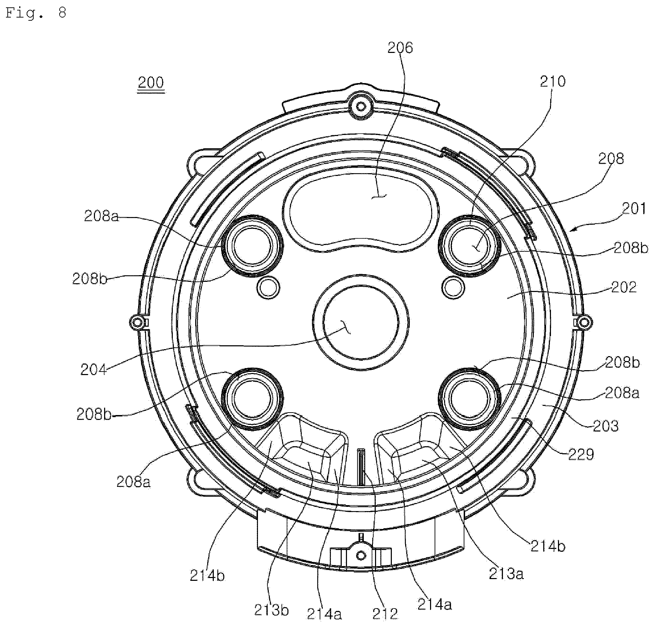

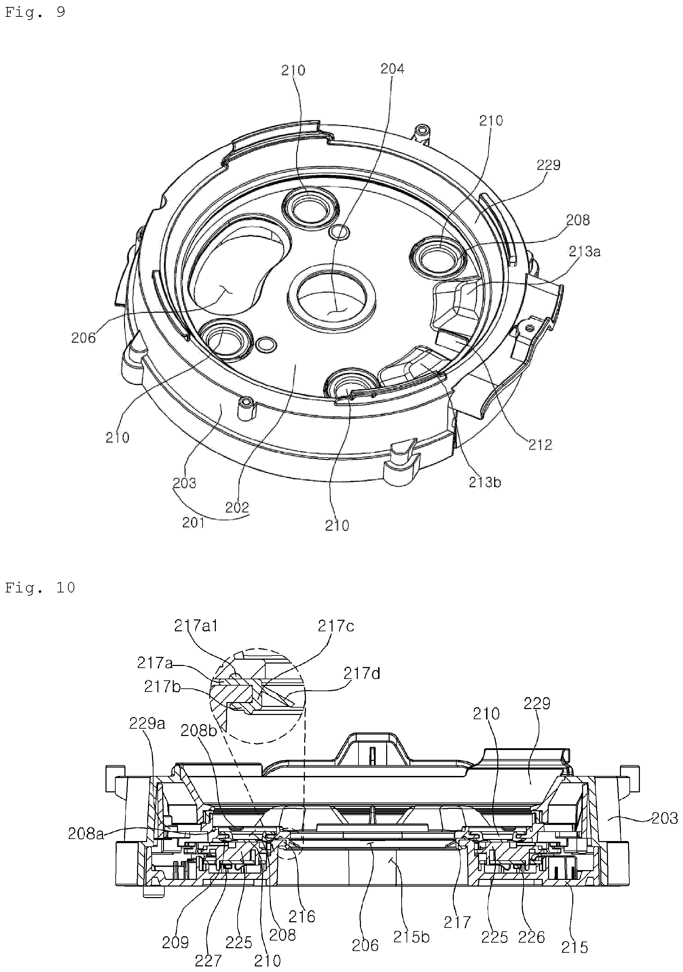

Hereinafter, the middle tray will be described with reference to FIGS. 8 and 9.

The humidifier includes a middle tray 200 that separates an area where the water tank 100 is placed and an area where the humidification module is placed. The middle tray 200 may detect the water level in the water tank 100. The middle tray 200 may emit light onto discharged humidified air.

The middle tray 200 is disposed under the water tank 100. The middle tray 200 is disposed under the inner shell 180. The middle tray 200 is disposed over the humidification module. The weight sensors 226 and 227 may be disposed on the middle tray 200 to detect the water level in the water tank 100 by their weight.

A lamp 229a may be disposed on the middle tray 200 to emit light toward the first discharge passage 32.

The middle tray 200 may include a tray body 201 and a lamp housing 229 disposed around an inner circumferential surface of the tray body 201.

The tray body 201 may include a tray plate 202 where the inner shell 180 is seated and a tray peripheral wall 203 disposed around the lamp housing 229.

A plurality of sensor recesses 208 are formed on a upper surface of the tray body 201, set back downwardly for the plurality of lower protrusions 186 and 188 of the inner shell 180 to be inserted therein. Here, the upper surface of the tray body 201 may be a upper surface of the tray plate 202.

A plurality of sensor recesses 208 may be formed on the upper surface of the middle tray 200.

The plurality of sensor recesses 208 may be spaced laterally and longitudinally.

A sensor recess flange 208a may protrude upward on a circumferential surface of each of the plurality of sensor recesses 208. A rib hole 208b may be formed at one portion of the circumferential surface of the sensor recess flange 208a, for the lower rib 190 to penetrate. The rib hole 208b may be formed where the lower rib 190 is disposed.

A sensor cover 210 may be disposed at each of the plurality of sensor recesses 208. The sensor cover 210 may be disposed under the sensor recess flange 208a. The sensor cover 210 may prevent water from moving to the weight sensor 226 and 227 through the sensor recess 208.

The plurality of lower protrusions 186 and 188 of the inner shell 180 may be disposed at the plurality of sensor recesses 208, respectively.

The fixing rib 212 may be disposed on the upper surface of the middle tray 200. The fixing rib 212 connected to the fixing projection 194 of the inner shell 180 may protrude on the upper surface of the tray body 201.

The fixing rib 212 may be inserted into the fixing slit 194a formed at the fixing projection 194.

A pair of fixing protrusions 213a and 213b may be disposed on the upper surface of the middle tray 200, spaced apart on either side of the fixing rib 212. The pair of fixing protrusions 213a and 213b may be laterally spaced apart from the fixing rib 212. The pair of fixing protrusions 213a and 213b may make contact with a circumferential surface of the fixing projection 194 of the inner shell 180.

The pair of fixing protrusions 213a and 213b each may have a downward-inclined surface corresponding to a portion of a upper surface thereof. Thus, when the inner shell 180 is placed over the middle tray 200, the pair of fixing protrusions 213a and 213b each may guide the fixing projection 194 in such a way as to be connected to the fixing rib 212.

The pair of fixing protrusions 213a and 213b may each include a first inclined surface 214a which is sloped in the direction in which the fixing rib 212 is disposed. The first inclined surface 214a may guide the fixing projection 194 in such a way as to be connected to the fixing rib 212.

The pair of fixing protrusions 213a and 213b may each include a second inclined surface 214b which is sloped in the direction in which the sensor recess 208 is disposed. The second inclined surface 214b may form a slope in the direction in which a contiguous sensor recess 208 is disposed. The second inclined surface 214b may guide the lower protrusion 186 and 188 in such a way as to be disposed in the sensor recesses 208.

The first hole 204 may be formed on one side of the tray body 201, for a supply pipe 230 to penetrate. The first hole 204 may be formed in the center of the tray body 201. Part of the supply pipe 230 may be disposed over the first hole 204. The connector 120 of the inner reservoir 102 may be connected to the supply pipe 230 disposed over the first hole 204.

A first flange may be disposed around the first hole 204, protruding upward from the tray body 201. Thus, it is possible to prevent water admitted to the top of the tray body 201 from moving downward from the middle tray 200.

A second hole 206 is formed on the other side of the tray body 201 to allow the humidified air released from the humidification module to move through. The exhaust connecting tube 192 is disposed over the second hole 206.

A second flange may be disposed around the second hole 206, protruding upward from the tray body 201. The second flange may prevent the water admitted to the top of the tray body 201 from moving downward from the middle tray 200 through the second hole 206.

The lamp housing 229 may be disposed along the periphery of the tray body 201. The lamp housing 229 may be formed in a ring shape. A lamp 229a may be disposed within the lamp housing 229 to emit light upward. One side of the lamp housing 229 may be formed of a material that transmits the light emitted from the lamp 229a.

The middle tray 200 may be disposed in such a way as to cover the top sides of the first humidification reservoir 300 and the second humidification reservoir 350.

The first hole 204 (or hole) may be formed in the middle tray 200 so as to supply the water held in the water tank to the humidification module. The plurality of weight sensors 226 and 227 (see FIG. 10) may be disposed at symmetrical positions on the middle tray 200.

The plurality of weight sensors 226 and 227 may be respectively disposed under the plurality of sensor recesses 208 formed on the middle tray 200.

The plurality of weight sensors 226 and 227 may be disposed symmetrically with respect to the first hole 204. An imaginary line connecting each pair of weight sensors 226 and 227 may be placed on opposite sides relative to the first hole 204 passes through the first hole 204.

The plurality of weight sensors 226 and 227 may be equally spaced from the center of the first hole 204.

The center point of a polygon formed by the plurality of weight sensors 226 and 227 may lie at the first hole 204. An arrangement of the plurality of weight sensors 226 and 227 disposed under the plurality of sensor recesses 208 may form a polygonal structure. As such, the center point of the polygonal structure formed by the arrangement of the plurality of weight sensors 226 and 227 may lie at the first hole 204.

Here, the center point may be the center of the area of the polygonal structure.

Referring to FIG. 10, components of the middle tray in relation to the weight sensors and connections between them will be described.

The middle tray 200 includes a tray body 201 and a tray base 215 disposed under the tray body 201. A space within which the components are placed may be formed between the tray base 215 and the tray body 201.

The tray body 201 may include a tray plate 202 forming a top surface and a tray peripheral wall 203 forming a circumferential surface.

The lamp housing 229 may be disposed between the tray plate 202 and the tray peripheral wall 203.

The weight sensors 226 and 227 may be placed on the tray base 215. A press body 225 may be disposed above each of the weight sensors 226 and 227. A sensor cover 210 may be placed over the press body 225.

The sensor recesses 208 may be formed on the tray plate 202. Sensor recess flanges 208a may be disposed on the tray plate 202, protruding upward from the peripheries of the sensor recesses 208. Cover ribs 209 may be disposed on the tray plate 202, protruding inward from where the sensor recesses 208 are formed. The cover ribs 209 may protrude inward from lower end portions of the sensor recess flanges 208a.

The sensor cover 210 may be mounted on each of the cover ribs 209. The sensor cover 210 may be formed in such a way that an outer peripheral edge thereof covers the cover rib 209. The sensor cover 210 may be formed in such a way that an outer peripheral edge thereof covers the top and bottom of the cover rib 209.

The sensor cover 210 may be disposed in such a way as to make contact with the press body 225. The sensor cover 210 may prevent water from entering the middle tray 200 through the sensor recess 208.

An exhaust hole 215b may be formed in the tray base 215, under the second hole 206. An exhaust hole rib 216 may be disposed on the tray base 215, protruding inward from where the exhaust hole 215b is formed. The exhaust hole rib 216 may be disposed under the tray plate 202.

A tray sealer 217 is disposed at the exhaust hole 215b formed in the tray base 215 to prevent water from entering an inside space of the middle tray 200.

The tray sealer 217 may have a structure that covers upper and lower parts of the exhaust hole rib 216. The tray sealer 217 may include an upper tray sealer 217a disposed over the exhaust hole rib 216, a lower tray sealer 217b disposed under the exhaust hole rib 216, and a vertical portion 217c connecting the upper tray sealer 217a and the lower tray sealer 217b.

At least one projection 217a1 may be formed on a top surface of the upper tray sealer 217a, protruding upward toward the tray body 201.

An inner protrusion 217d is formed on an inner peripheral edge of the tray sealer 217, protruding radially inward. The inner protrusion 217d may protrude inward toward the exhaust hole 215b from the vertical portion 217c. The inner protrusion 217d may be sloped downward toward the center of the exhaust hole 215b.

The lamp 229a may be disposed under the lamp housing 229.

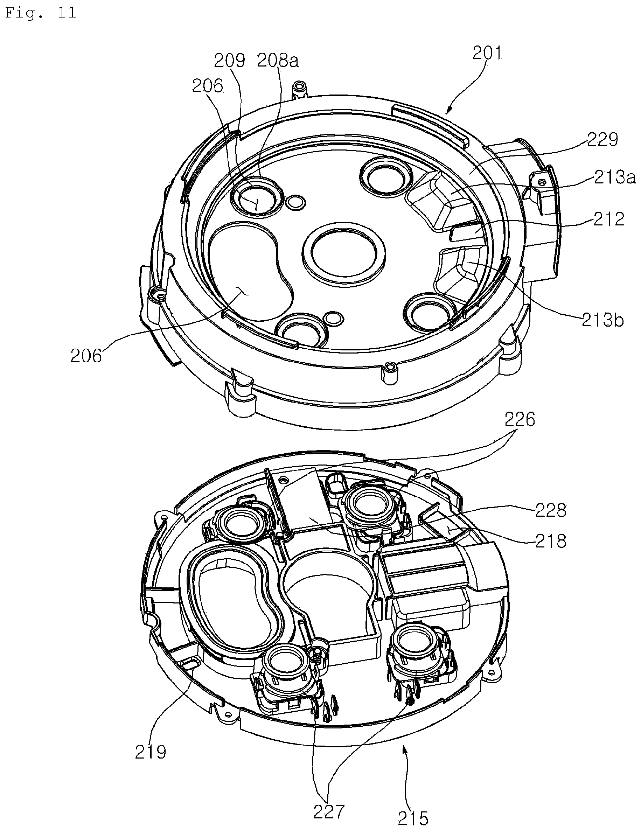

Referring to FIG. 11, a structure of the middle tray will be described additionally.

The middle tray 200 includes a tray body 201 and a tray base 215. The lamp housing 229 may be placed on the tray body 201.

The tray body 201 may have a first hole 204 for the supply pipe 230 to penetrate and includes a second hole 206 for the humidified air generated by the humidification module to move through. The tray body 201 may have a plurality of sensor recesses 208 for fixing the inner shell 180 in place.

The sensor recess flanges 208a, which respectively protrude upward from the circumferential surfaces of the plurality of sensor recesses 208, and the cover ribs 209, which respectively protrude inward from where the plurality of sensor recesses 208 are formed, may be disposed on the tray body 201.

The fixing rib 212 and the pair of fixing protrusions 213a and 213b disposed on either side of the fixing rib 212 and spaced apart from each other, may be disposed on the tray body 201.

A supply pipe hole 215a formed under the first hole 204 and an exhaust hole 215b formed under the second hole 206 may be formed in the tray base 215.

The plurality of weight sensors 226 and 227 may be placed on the tray base 215. The plurality of weight sensors 226 and 227 may be respectively disposed under the plurality of sensor recesses 208 formed on the tray body 201.

On the tray base 215, a plurality of press bodies 225 may be disposed over the plurality of weight sensors 226 and 227, respectively. The plurality of press bodies 225 may be disposed in such a way as to make contact with the plurality of weight sensors 226 and 227, respectively.

A sensor circuit board 228 connected to the plurality of weight sensors 226 and 227 may be placed on the tray base 215.

A wire hole 218 through which a wire passes may be formed in the tray base 215.

A tray drain hole 219 may be formed in the tray base 215 to send water admitted into the middle tray 200 to the outside.

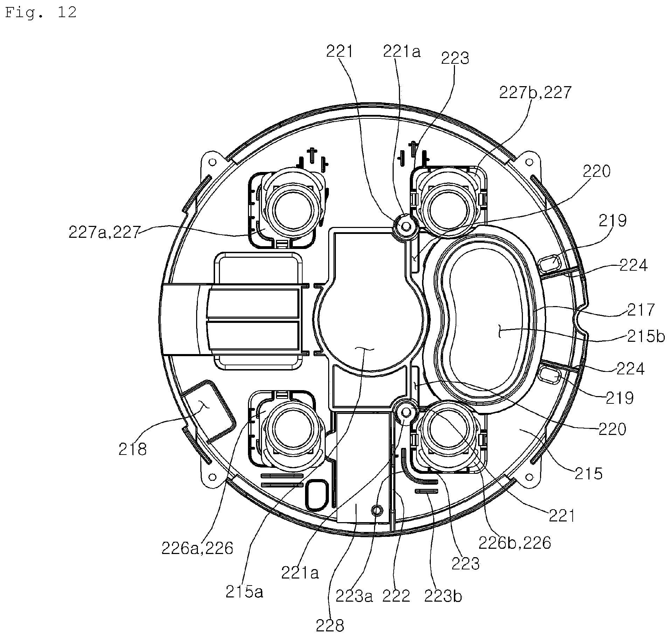

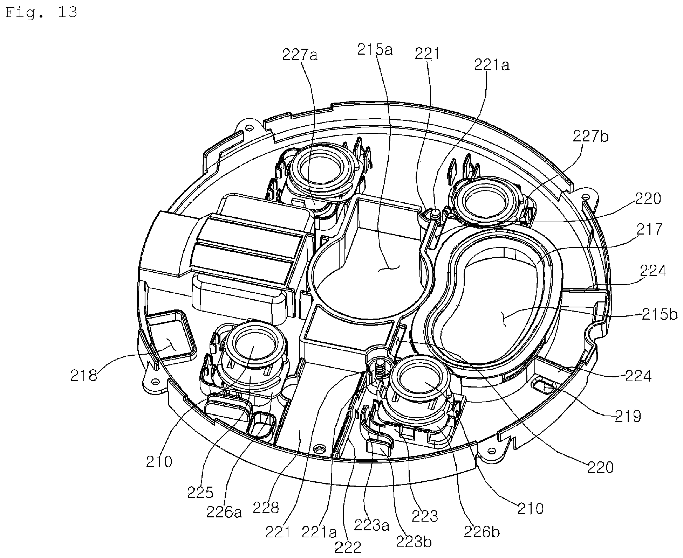

Referring to FIGS. 12 and 13, a drainage structure inside the tray base will be described.

The tray sealer 217 may be disposed around the exhaust hole 215b. The tray sealer 217 may prevent water from getting inside through the gap between the tray body 201 and the tray base 215.

The plurality of weight sensors 226 and 227 may be placed on the tray base 215. On the tray base 215, first weight sensors 226 may be disposed on one side of the supply pipe hole 215a, and second weight sensors 227 may be disposed on the opposite side of the first weight sensors 226 relative to the supply pipe hole 215a.

The first weight sensors 226 may include a first front weight sensor 226a and a first rear weight sensor 226b disposed at the rear of the first front weight sensor 226a. The second weight sensors 227 may include a second front weight sensor 227a and a second rear weight sensor 227b disposed at the rear of the second front weight sensor 227a.

The sensor circuit board 228 may be disposed between the first front weight sensor 226a and the first rear weight sensor 226b.

A circuit board partition 222 may be placed on the tray base 215, protruding upward from the rear of the sensor circuit board 228.

The sensor circuit board 228 may be disposed in front of the exhaust hole 215b. The sensor circuit board 228 may be disposed on one lateral side of the supply pipe hole 215a.

The first rear weight sensor 226b and the second rear weight sensor 227b may be disposed on either side of the exhaust hole 215b. The exhaust hole 215b may be disposed between the first rear weight sensor 226b and the second rear weight sensor 227b.

The first rear weight sensor 226b may be disposed at the rear of the sensor circuit board 228.

A pair of guide grooves 220 may be formed in front of the exhaust hole 215b to guide the movement of water admitted through the exhaust hole 215b. The pair of guide grooves 220 each have a structure that may extend laterally. The pair of guide grooves 220 may each send water admitted through a peripheral area of the exhaust hole 215b to the fronts of the first rear weight sensor 226b and the second rear weight sensor 227b.

One of the pair of guide grooves 220 may send the water admitted through the peripheral area of the exhaust hole 215b to a space between the first rear weight sensor 226b and the sensor circuit board 228.

A pair of fastening portions 221 connecting the tray body 201 and the tray base 215 may be disposed in front of the exhaust hole 215b. Each of the fastening portions 221 may form a space where a fastening member is placed.

Each of the fastening portions 221 may have an opening 221a on one side. The openings 221a respectively formed on the pair of fastening portions 221 may be formed in such a way as to face the fronts of the first rear weight sensor 226b and the second rear weight sensor 227b, respectively.

Water moving along the pair of guide grooves 220 may move to the pair of fastening portions 221, respectively. The water moving to the pair of fastening portions 221 may move to the fronts of the first rear weight sensor 226b and the second rear weight sensor 227b.

The water moving to one of the pair of fastening portions 221 may move between the first rear weight sensor 226b and the sensor circuit board 228 through the opening 221a.

On the tray base 215, upward-protruding ridges may be formed where the weight sensors 226 and 227a are placed. On the tray base 215, weight sensor partitions 223 may be disposed around where the weight sensors 226 and 227 are placed.

The tray drain hole 219 may be disposed at the rear of the exhaust hole 215b. Water admitted to the rear of the exhaust hole 215b may move directly to the tray drain hole 219.

Incidentally, the water admitted to the front of the exhaust hole 215b may move along the peripheries of the weight sensors 226 and 227 through the guide grooves 220 and then move to the tray drain hole 219. The water admitted to the front of the exhaust hole 215b may move to the tray drain hole 219 through the guide grooves 220 and the fastening portions 221.

A drain hole partition 224 may be disposed at the rear of the tray base 215. The drain hole partition 224 may be disposed on one side of the tray drain hole 219. The drain hole partition 224 may allow water moving along the tray base 215 to be drained through the tray drain hole 219.

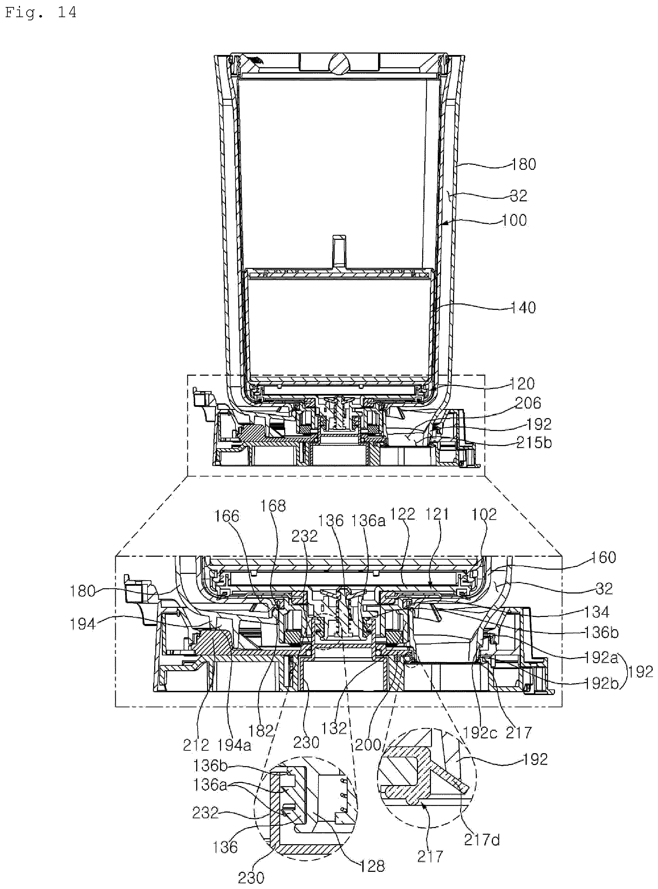

Referring to FIG. 14, the connection between the middle tray 200 and the inner shell 180 while the inner shell 180 is mounted and the configuration of the components related thereto will be described. Also, the connections between the inner shell, the water tank, and the supply pipe will be described.

The first discharge passage 32 may be formed between the inner shell 180 and the water tank 100.

The water softener 140 may be placed within the water tank 100.

The fixing rib 212 of the middle tray 200 may be inserted into the fixing slit 194a formed on the fixing projection 194 on the inner shell 180. With the fixing rib 212 inserted in the fixing slit 194a, an upper end of the fixing rib 212 may be disposed to be spaced apart from the inner shell 180. Thus, the load of the inner shell 180 may not be transferred to the fixing rib 212.

The exhaust connecting tube 192 on the inner shell 180 may be inserted into the second hole 206 of the middle tray 200. The exhaust connecting tube 192 is disposed in such a way as to make contact with the tray sealer 217. The exhaust connecting tube 192 may be disposed over the tray sealer 217.

The tray sealer 217 may slope downward. Thus, the exhaust connecting tube 192 on the inner shell 180 may be disposed over the tray sealer 217 to make contact with it.

The exhaust connecting tube 192 may include a first exhaust connecting tube 192a disposed over the middle tray 200 and a second exhaust connecting tube 192b extending downward from the first exhaust connecting tube 192a. A stepped portion 192c may be formed between the first exhaust connecting tube 192a and the second exhaust connecting tube 192b. A lower end of the first exhaust connecting tube 192a may be spaced a certain distance upward from the upper surface of the middle tray 200.

The second exhaust connecting tube 192b may penetrate the second hole 206. A lower end portion of the second exhaust connecting tube 192b may be disposed in such a way as to make contact with the tray sealer 217.

Although not shown, the supply pipe 230 may be connected to the connector 120 via the first hole 204 of the middle tray 200.

Hereinafter, the connections between the inner shell, the water tank, the connector, and the supply pipe which are disposed above or below the middle tray will be described additionally.

The inner reservoir 102 may be disposed within the outer reservoir 160. The inner reservoir 102 may be disposed in such a way to make contact with the outer reservoir 160. The outer reservoir 160 may include a lower rim 166 protruding downward from a lower surface of the outer reservoir 160.

An inner projection 168 may be disposed on an inner circumferential surface of the lower rim 166, protruding inward. The inner projection 168 may be disposed in such a way as to make contact with an outer sealer 134 of a connector holder 132. The inner projection 168 may be disposed over the upper rim 182 of the inner shell 180.

The inner shell 180 may be placed around the periphery of the outer reservoir 160. The outer reservoir 160 and the inner shell 180 may be spaced apart from each other. The first discharge passage 32 may be formed between the outer reservoir 160 and the inner shell 180.

Part of the connector 120 may be disposed in such a way as to penetrate the bottom surface of the inner shell 180. The inner shell 180 may include an upper rim 182 protruding upward from the periphery of the shell through-hole 184 formed in the bottom surface thereof.

The upper rim 182 may be disposed inside the lower rim 166. An upper end of the upper rim 182 may contact the inner projection 168 which protrudes from an inner circumferential surface of the lower rim 166.

The connector 120 may include a connector body 121 and a connector holder 132. The connector body 121 may include a connector plate 122 and a connector pipe 128 extending downward from the connector plate 122.

The connector plate 122 may be disposed under the water softener 140. The connector plate 122 may be connected to the water softener 140.

An inner sealer 136 may be placed around the outer periphery of the connector pipe 128. When the connector 120 is placed above the supply pipe 230, the inner sealer 136 may seal the gap between the connector 120 and the supply pipe 230.

The inner sealer 136 may be formed of a rubber material that can change its configuration. The inner sealer 136 may be disposed in such a way as to make contact with the outer periphery of the connector pipe 128. An outwardly protruding part may be formed on a lower end of the connector pipe 128 so as to keep the inner sealer 136 from moving downward.

The inner sealer 136 may include a sealing projection 136a which protrudes outward. The inner sealer 136 may include a plurality of sealing projections 136a which protrude outward and are vertically spaced apart.

The sealing projection 136a may be formed to have a larger diameter toward the top. In a cross-sectional view, the sealing projection 136a may have the shape of a triangle whose top face has a large area.

The diameter of an outer peripheral edge of the sealing projection 136a may be larger than the diameter of an inner circumferential surface of an inlet port 232 of the supply pipe 230.

The inner sealer 136 may include an upper end projection 136b which is disposed above the sealing projection 136a and protrudes radially outward. The upper end projection 136b may make contact with an upper end portion of the inlet port 232 of the supply pipe 230.

The connector holder 132 may be disposed in such a way as to be fixed to the outer periphery of the connector pipe 128. The connector holder 132 may be disposed under the bottom side of the inner reservoir 102. The bottom side of the inner reservoir 102 may be disposed between the connector holder 132 and the connector plate 122.

The outer sealer 134 disposed on an outer circumferential surface of the connector holder 132 may be disposed in such a way as to make contact with the inner projection 168 of the outer reservoir 160. The outer sealer 134 may be disposed in such a way as to make contact with the upper rim 182 of the inner shell 180.

Part of the construction of the connector 120 protrudes outward from the outer reservoir 160.

A bottom part of the connector 120 may be connected to the inlet port 232 of the supply pipe 230. The inner sealer 136 disposed on the outer circumferential surface of the connector pipe 128 may contact the inner circumferential surface of the inlet port 232. The plurality of sealing projections 136a of the inner sealer 136 may make contact with the inner circumferential surface of the inlet port 232.

The inner sealer 136 and the inlet port 232 may overlap 0.3 to 0.7 mm around the entire perimeter. The diameter of an outer peripheral edge of the inner sealer 136 may be 0.3 to 0.7 mm larger than the diameter of an inner peripheral edge of the inlet port 232.

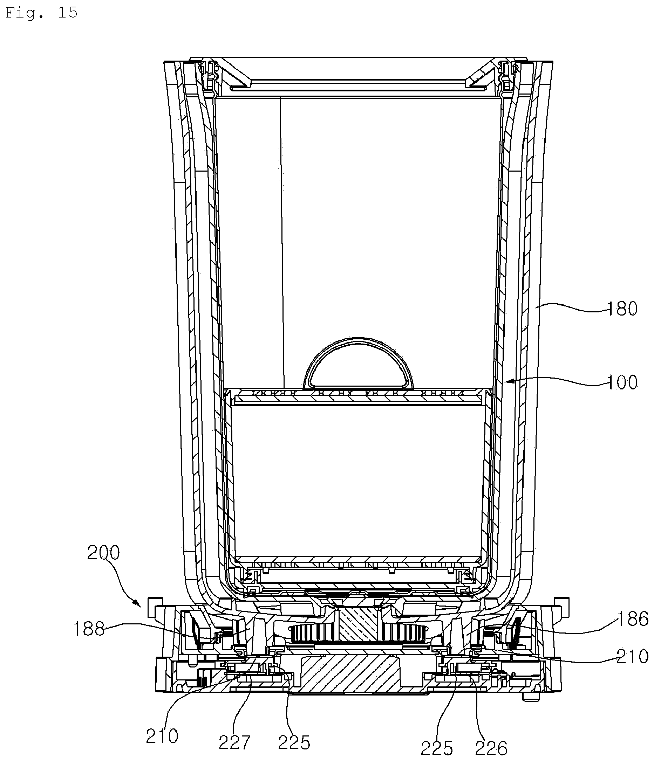

Referring to FIG. 15, the connection between the middle tray 200 and the inner shell while the inner shell is mounted and the configuration of the components related thereto will be described.

The lower protrusions 186 and 188 of the inner shell 180 may be disposed on the sensor recesses 208 of the middle tray 200. The lower protrusions 186 and 188 of the inner shell 180 may be disposed over the weight sensors 226 and 227 of the middle tray 200. The sensor cover 210 may be disposed between the lower protrusion 186 and 188 and the weight sensor 226 and 227. The lower protrusion 186 and 188 may be disposed in such a way as to make contact with the sensor cover 210.

The press body 225 may be disposed under the sensor cover 210. The press body 225 may be disposed between the sensor cover 210 and the weight sensor 226 and 227.

When the inner shell 180 is disposed over the middle tray 200, the plurality of lower protrusions 186 and 188 may be disposed in such a way as to make contact with the plurality of sensor covers 210, respectively. Thus, the load of the water tank 100 including the inner shell 180 may be transferred to the weight sensors 226 and 227.

Throughout the document, preferred embodiments of the present invention have been described with reference to appended drawings; however, the present invention is not limited to the embodiments above. Rather, it should be noted that various modifications of the present invention may be made by those skilled in the art to which the present invention belongs without leaving the technical scope of the present invention defined by the appended claims, and these modifications should not be understood individually from the technical principles or perspectives of the present invention.

## Claims

1. A humidifier comprising:
a water tank (100) configured to form a space for storing water;
a humidification module (300, 350) disposed below the water tank (100) and configured to generate humidified air using water supplied from the water tank (100);
a middle tray (200) disposed between the humidification module (300, 350) and the water tank (100), the middle tray (200) having a hole (206) through which the humidified air generated by the humidification module (300, 350) flows; and
an inner shell (180) forming a discharge passage through which the humidified air flows between the water tank (100) and the inner shell (180) contacting the middle tray (200) that forms the hole (206),
wherein the middle tray (200) includes:
a tray body (201) that contacts the inner shell (180);
**characterised in** further comprising:
a tray base (215) disposed below the tray body (201); and
a tray sealer (217) disposed around the hole (206) and forming a seal between the tray body (201) and the tray base (215),
wherein the inner shell (180) includes an exhaust connecting tube (192) into which the humidified air generated from the humidification module (300, 350) flows,
wherein the tray sealer (217) includes an inner protrusion (217d) protruding toward the center of the hole (206),
wherein the inner protrusion (217d) is inclined downward toward the center of the hole (206), and
wherein when the inner shell (180) is disposed on the middle tray (200), the exhaust connecting tube (192) is in contact with the inner protrusion (217d).

2. The humidifier of claim 1, wherein the tray sealer (217) comprises:
an upper tray sealer (217a) disposed between the tray base (215) and the tray body (201);
a lower tray sealer (217b) disposed below the tray base (215); and
a vertical portion (217c) connecting the upper tray sealer (217a) and the lower tray sealer (217b),
wherein the inner protrusion (217d) protrudes toward the center of the hole (206) from the vertical portion (217c).

3. The humidifier of claim 2, wherein at least one projection (217a1) protruding upward toward the tray body (201) is formed on a top surface of the upper tray sealer (217a).

4. The humidifier of any one of claims 1 to 3, wherein a tray drain hole (219) is formed in the tray base (215) to send water admitted into the middle tray (200) out of the middle tray (200);
and preferably
wherein the tray drain hole (219) is disposed to the rear of the hole (206), and the tray base (215) has a guide groove (220) disposed in front of the hole (206) and configured to guide water introduced into the middle tray (200) to the tray drain hole (219).

5. The humidifier of claim 4, wherein a plurality of weight sensors (226, 227) for sensing the weight of the water tank (100) and a sensor circuit board (228) connected to the plurality of weight sensors (226, 227) are disposed in the middle tray (200), and the guide groove (220) is configured to send the water introduced into the middle tray (200) between the weight sensors (226, 227) and the sensor circuit board (228);
and preferably
wherein a circuit board partition (222) disposed on one side of the sensor circuit board (228) is placed on the tray base (215), and the guide groove (220) is configured to send the water introduced into the middle tray (200) to the rear of the circuit board partition (222).

6. The humidifier of claim 5, wherein the tray base (215) includes a fastening portion (221) disposed in front of the hole (206) and configured to form a space in which a fastening member for connecting the tray body (201) and the tray base (215) is disposed,
wherein the fastening portion (221) is configured to send water flowing from the guide groove (220) between the weight sensors (226, 227) and the sensor circuit board (228).

7. The humidifier of any one of claims 1 to 4, wherein the middle tray (200) comprises:
a weight sensor (226, 227) disposed on the tray base (215) and configured to sense the weight of the water tank (100); and
a sensor cover (210) disposed on the tray body (201) above the weight sensor (2276, 227) and in contact with the inner shell (180).

8. The humidifier of claim 7, wherein the tray body (201) includes a sensor recess (208) opened in a region in which the sensor cover (210) is disposed, and
wherein a sensor recess flange (208a) that protrudes upward from a circumferential surface of the sensor groove (208) is disposed on the tray body (201);
and preferably
wherein a cover rib (209) protruding inward is disposed on an inner circumferential surface of the sensor recess flange (208a), and the sensor cover (210) is mounted on the cover rib (209).

9. The humidifier of claim 7, wherein the inner shell (180) includes:
a lower protrusion (186, 188) protruding downward to contact the sensor cover (210); and
an exhaust connecting tube (192) protruding downward to admit the humidified air generated by the humidification module (300, 350),
wherein when the lower protrusion (186, 188) contacts the sensor cover (210), the exhaust connecting tube (192) contacts the tray sealer (217).

## Patentansprüche

1. Befeuchter, der aufweist:
einen Wasserbehälter (100), der konfiguriert ist, einen Raum zum Speichern von Wasser zu bilden;
ein Befeuchtungsmodul (300, 350), das unter dem Wasserbehälter (100) angeordnet und konfiguriert ist, befeuchtete Luft unter Verwendung von Wasser zu erzeugen, das aus dem Wasserbehälter (100) zugeführt wird;
eine mittlere Schale (200), die zwischen dem Befeuchtungsmodul (300, 350) und dem Wasserbehälter (100) angeordnet ist, wobei die mittlere Schale (200) eine Öffnung (206) aufweist, durch die die vom Befeuchtungsmodul (300, 350) erzeugte befeuchtete Luft strömt; und
eine innere Hülle (180), die einen Auslasskanal bildet, durch den die befeuchtete Luft zwischen dem Wasserbehälter (100) und der inneren Hülle (180) strömt, die die mittlere Schale (200) berührt, die die Öffnung (206) bildet,
wobei die mittlere Schale (200) aufweist:
einen Schalenkörper (201), der die innere Hülle (180) berührt;
**gekennzeichnet dadurch, dass** er ferner aufweist:
eine Schalenbasis (215), die unter dem Schalenkörper (201) angeordnet ist; und
eine Schalenabdichtung (217), die um die Öffnung (206) angeordnet ist und eine Abdichtung zwischen dem Schalenkörper (201) und der Schalenbasis (215) bildet,
wobei die innere Hülle (180) ein Ablassverbindungsrohr (192) aufweist, in das die vom Befeuchtungsmodul (300, 350) erzeugte befeuchtete Luft strömt,
wobei die Schalenabdichtung (217) einen inneren Vorsprung (217d) aufweist, der zur Mitte der Öffnung (206) vorsteht,
wobei der innere Vorsprung (217d) nach unten zur Mitte der Öffnung (206) geneigt ist, und
wobei, wenn die innere Hülle (180) auf der mittleren Schale (200) angeordnet ist, das Ablassverbindungsrohr (192) mit dem inneren Vorsprung (217d) in Kontakt steht.

2. Befeuchter nach Anspruch 1, wobei die Schalenabdichtung (217) aufweist:
eine obere Schalenabdichtung (217a), die zwischen der Schalenbasis (215) und dem Schalenkörper (201) angeordnet ist;
eine untere Schalenabdichtung (217b), die unter der Schalenbasis (215) angeordnet ist; und
einen vertikalen Abschnitt (217c), der die obere Schalenabdichtung (217a) und die untere Schalenabdichtung (217b) verbindet,
wobei der innere Vorsprung (217d) zur Mitte der Öffnung (206) vom vertikalen Abschnitt (217c) vorsteht.

3. Befeuchter nach Anspruch 2, wobei mindestens eine Erhebung (217a1), die nach oben zum Schalenkörper (201) vorsteht, an einer Oberseite der oberen Schalenabdichtung (217a) ausgebildet ist.

4. Befeuchter nach einem der Ansprüche 1 bis 3, wobei in der Schalenbasis (215) eine Schalenablauföffnung (219) ausgebildet ist, um in die mittlere Schale (200) aufgenommenes Wasser aus der mittleren Schale (200) heraus zu schicken;
und vorzugsweise
wobei die Schalenablauföffnung (219) hinter der Öffnung (206) angeordnet ist und die Schalenbasis (215) eine Führungsnut (220) aufweist, die vor der Öffnung (206) angeordnet und konfiguriert ist, in die mittlere Schale (200) eingeleitetes Wasser zur Schalenablauföffnung (219) zu leiten.

5. Befeuchter nach Anspruch 4, wobei mehrere Gewichtssensoren (226, 227) zum Erfassen des Gewichts des Wasserbehälters (100) und eine mit den mehreren Gewichtssensoren (226, 227) verbundene Sensorleiterplatte (228) in der mittleren Schale (200) angeordnet sind, und die Führungsnut (220) konfiguriert ist, das in die mittlere Schale (200) eingeleitete Wasser zwischen die Gewichtssensoren (226, 227) und die Sensorleiterplatte (228) zu führen;
und vorzugsweise
wobei eine Leiterplatten-Trennwand (222), die auf einer Seite der Sensorleiterplatte (228) angeordnet ist, auf der Schalenbasis (215) platziert ist und die Führungsnut (220) konfiguriert ist, das in die mittlere Schale (200) eingeleitete Wasser zur Rückseite der Leiterplatten-Trennwand (222) zu führen.

6. Befeuchter nach Anspruch 5, wobei die Schalenbasis (215) einen Befestigungsabschnitt (221) aufweist, der vor der Öffnung (206) angeordnet und konfiguriert ist, einen Raum zu bilden, in dem ein Befestigungselement zum Verbinden des Schalenkörpers (201) und der Schalenbasis (215) angeordnet ist,
wobei der Befestigungsabschnitt (221) konfiguriert ist, aus der Führungsnut (220) strömendes Wasser zwischen die Gewichtssensoren (226, 227) und die Sensorleiterplatte (228) zu führen.

7. Befeuchter nach einem der Ansprüche 1 bis 4, wobei die mittlere Schale (200) aufweist:
einen Gewichtssensor (226, 227), der auf der Schalenbasis (215) angeordnet und konfiguriert ist, das Gewicht des Wasserbehälters (100) zu erfassen; und
eine Sensorabdeckung (210), die am Schalenkörper (201) über dem Gewichtssensor (2276, 227) angeordnet ist und mit der inneren Hülle (180) in Kontakt steht.

8. Befeuchter nach Anspruch 7, wobei der Schalenkörper (201) eine Sensoraussparung (208) aufweist, die in einem Bereich offen ist, in dem die Sensorabdeckung (210) angeordnet ist, und
wobei ein Sensoraussparungsflansch (208a), der von einer Umfangsfläche der Sensornut (208) nach oben vorsteht, am Schalenkörper (201) angeordnet ist;
und vorzugsweise
wobei eine nach innen vorstehende Abdeckungsrippe (209) an einer Innenumfangsfläche des Sensoraussparungsflansches (208a) angeordnet ist und die Sensorabdeckung (210) an der Abdeckungsrippe (209) befestigt ist.

9. Befeuchter nach Anspruch 7, wobei die innere Hülle (180) aufweist:
einen unteren Vorsprung (186, 188), der nach unten vorsteht, um die Sensorabdeckung (210) zu berühren; und
ein Ablassverbindungsrohr (192), das nach unten vorsteht, um die vom Befeuchtungsmodul (300, 350) erzeugte befeuchtete Luft aufzunehmen,
wobei, wenn der untere Vorsprung (186, 188) die Sensorabdeckung (210) berührt, das Ablassverbindungsrohr (192) die Schalenabdichtung (217) berührt.

## Revendications

1. Humidificateur, comprenant :
un réservoir d'eau (100) prévu pour former un espace de stockage d'eau ;
un module d'humidification (300, 350) disposé sous le réservoir d'eau (100) et prévu pour générer de l'air humidifié au moyen d'eau refoulée du réservoir d'eau (100) ;
un bac central (200) disposé entre le module d'humidification (300, 350) et le réservoir d'eau (100), ledit bac central (200) présentant un orifice (206) par où s'écoule l'air humidifié généré par le module d'humidification (300, 350) ; et
une enveloppe intérieure (180) formant un passage de refoulement par lequel l'air humidifié s'écoule entre le réservoir d'eau (100) et l'enveloppe intérieure (180) en contact avec le bac central (200) formant l'orifice (206),
où le bac central (200) comprend :
un corps de bac (201) en contact avec l'enveloppe intérieure (180) ;
**caractérisé en ce qu'**il comprend en outre :
une base de bac (215) disposée sous le corps de bac (201) ; et
un joint de bac (217) disposé autour de l'orifice (206) et formant un joint d'étanchéité entre le corps de bac (201) et la base de bac (215),
où l'enveloppe intérieure (180) présente un tube de raccord d'évacuation (192) où s'écoule l'air humidifié généré par le module d'humidification (300, 350),
où le joint de bac (217) présente une saillie intérieure (217d) s'étendant vers le centre de l'orifice (206),
où la saillie intérieure (217d) est inclinée vers le bas en direction du centre de l'orifice (206), et
où, lorsque l'enveloppe intérieure (180) est disposée sur le bac central (200), le tube de raccord d'évacuation (192) est en contact avec la saillie intérieure (217d).

2. Humidificateur selon la revendication 1, où le joint de bac (217) comprend :
un joint de bac supérieur (217a) disposé entre la base de bac (215) et le corps de bac (201) ;
un joint de bac inférieur (217b) disposé sous la base de bac (215) ; et
une partie verticale (217c) reliant le joint de bac supérieur (217a) et le joint de bac inférieur (217b),
où la saillie intérieure (217d) s'étend depuis la partie verticale (217c) vers le centre de l'orifice (206).

3. Humidificateur selon la revendication 2, où au moins une saillie (217a1) s'étendant vers le haut en direction du corps de bac (201) est formée sur une surface supérieure du joint de bac supérieur (217a).

4. Humidificateur selon l'une des revendications 1 à 3, où un orifice de vidange de bac (219) est formé dans la base de bac (215) pour évacuer hors du bac central (200) l'eau admise dans ledit bac central (200) ;
et où, de préférence,
l'orifice de vidange de bac (219) est disposé à l'arrière de l'orifice (206), et la base de bac (215) présente une rainure de guidage (220) disposée à l'avant de l'orifice (206) et prévue pour guider l'eau introduite dans le bac central (200) vers l'orifice de vidange de bac (219).

5. Humidificateur selon la revendication 4, où une pluralité de capteurs de poids (226, 227) destinés à détecter le poids du réservoir d'eau (100) et une carte de circuit imprimé de capteurs (228) reliée à ladite pluralité de capteurs de poids (226, 227) sont disposés dans le bac central (200), et où la rainure de guidage (220) est prévue pour acheminer l'eau introduite dans le bac central (200) entre les capteurs de poids (226, 227) et la carte de circuit imprimé de capteurs (228) ;
et où, de préférence,
une cloison de carte de circuit imprimé (222), disposée sur un côté de la carte de circuit imprimé de capteurs (228) est placée sur la base de bac (215), et la rainure de guidage (220) est prévue pour acheminer l'eau introduite dans le bac central (200) vers l'arrière de la cloison de carte de circuit imprimé (222).

6. Humidificateur selon la revendication 5, où la base de bac (215) présente une partie de fixation (221) disposée devant l'orifice (206) et prévue pour former un espace où est disposé un élément de fixation destiné à raccorder le corps de bac (201) et la base de bac (215),
où la partie de fixation (221) est prévue pour acheminer l'eau s'écoulant de la rainure de guidage (220) entre les capteurs de poids (226, 227) et la carte de circuit imprimé de capteurs (228).

7. Humidificateur selon l'une des revendications 1 à 4, où le bac central (200) comprend :
un capteur de poids (226, 227) disposé sur la base de bac (215) et prévu pour détecter le poids du réservoir d'eau (100) ; et
un couvercle de capteur (210) disposé sur le corps de bac (201) au-dessus du capteur de poids (2276, 227) et en contact avec l'enveloppe intérieure (180).

8. Humidificateur selon la revendication 7, où le corps de bac (201) présente un évidement de capteur (208) ouvert dans une zone où est disposé le couvercle de capteur (210), et
où une bride d'évidement de capteur (208a), faisant saillie vers le haut à partir d'une surface circonférentielle de la rainure de capteur (208), est disposée sur le corps de bac (201) ;
et où, de préférence,
une nervure de couvercle (209) faisant saillie vers l'intérieur est disposée sur une surface circonférentielle intérieure de la bride d'évidement de capteur (208a), et le couvercle de capteur (210) est monté sur la nervure de couvercle (209).

9. Humidificateur selon la revendication 7, où l'enveloppe intérieure (180) comprend :
une saillie inférieure (186, 188) s'étendant vers le bas de manière à venir en contact avec le couvercle de capteur (210) ; et
un tube de raccord d'évacuation (192) faisant saillie vers le bas pour recevoir l'air humidifié généré par le module d'humidification (300, 350),
où, lorsque la saillie inférieure (186, 188) entre en contact avec le couvercle de capteur (210), le tube de raccord d'évacuation (192) entre en contact avec le joint de bac (217).
